# EUROPEAN PATENT SPECIFICATION

(11) **EP 2 404 750 B1**
(45) Date of publication and mention of the grant of the patent: **28.10.2020**
(21) Application number: 11152062.3
(22) Date of filing: 25.01.2011
(51) Int. Cl.: B32B 5/26, E04C 2/24, E04C 2/20, E04C 2/16, E04C 2/08, B32B 15/08, B32B 11/10, E04C 2/26

(54) **Panel structure that is impermeable to gases, particularly for the insulation of buildings**
Für Gase undurchlässige Paneelstruktur, insbesondere zur Isolierung von Gebäuden
Structure de panneau imperméable aux gaz, en particulier pour l'isolation des bâtiments

(30) Priority: 08.07.2010 IT TV20100034 U
(43) Date of publication of application: 11.01.2012
(73) Proprietor: Silcart S.p.A., 31030 Carbonera, Frazione Mignagola TV (IT)
(72) Inventor: Faotto, Ugo, 31100, TREVISO (IT)
(74) Representative: Modiano, Micaela Nadia

(56) References cited:
- DE-A1- 2 451 143
- DE-U1-202005 015 125
- US-A- 4 948 655
- US-A- 5 220 760
- US-A1- 2004 014 382
- US-A1- 2005 124 241
- US-A1- 2009 280 320

## Description

The present application refers to a panel structure that is impermeable to gases, particularly for the insulation of buildings.

Nowadays the cost of domestic heating or cooling has become an important part of the family economy and of the running costs of a company; this factor, combined with protection of the environment and the need to save energy, has led to an improvement in heating systems, not only in terms of the production of heat, but especially in terms of thermal insulation of an air-conditioned environment.

The study and research of insulating materials has also led to an improvement in materials in favour of products with cellular structures, which generally are expanded synthetic products (polystyrene, styrene, polyurethane).

Insulating materials with cellular structures have a reduced average thermal conductivity λ [W m⁻¹ K⁻¹] owing to their very structure, of which only 3-5% by volume are formed of polymer and of which 97-95% by volume are a gaseous phase of expanding agents that is enclosed by the cells.

The small quantity of polymer and the gaseous phase limit the thermal conduction, while the small size of the closed cells limits the thermal convection between the gas and the internal surface of such cells.

The phenomenon that most penalises the performance of these cellular structures is the partial diffusion of the gaseous phase towards the outside.

Expanded polyurethane is often used nowadays because, with an average thermal conductivity coefficient λ that is lower than that of other commercial insulators (and therefore makes it a better insulator), it makes it possible to achieve good thermal insulation using thinner panels.

Insulating panels for construction are known which comprise a cellular structure covered on both sides by a thin metal layer, generally aluminium, or coverings that are impermeable to gases and adapted to prevent the diffusion of the gaseous phase towards the panel outside.

The types of insulating panel containing PUR (polyurethane) or PIR (polyisocyanurates) with gas-tight covering (i.e. impermeable to gas) are made using various types of surfaces, for example by means of sheets of aluminium foil which are bonded, by means of thin layers of glue, to sheets of fibreglass.

This type of panel has the drawback of the possible creation of micro-holes in the thin covering film of aluminium, caused by direct contact between such aluminium film and the fibreglass (which is normally sharp).

This fact impairs the insulating properties of the panel owing to diffusion of the gaseous phase towards the outside of the panel.

Other types of insulating panel containing PUR (polyurethane) or PIR (polyisocyanurates) with gas-tight covering (i.e. impermeable to gas) are manufactured with the surfaces being covered with lacquered plain aluminium foil, aluminium foil bonded with plastic film, aluminium foil bonded with paper, or multilayer with aluminium film.

A drawback of the solutions just described consists in a low dimensional stability of the insulating panel, both during its production and over time, caused mainly by the absence of fibreglass inside the structure which would give it dimensional rigidity.

The main drawback of all of the known solutions mentioned above consists in the fact that the gas-impermeable covering is easily perforated during installation, thus allowing the diffusion of the gases outside the panel and the impairment of its insulating capacities.

A further drawback of the cited insulating panels is their inability to be walked on and the low resistance to abrasion.

A further drawback of insulating panels of the known type consists in the incompatibility with the application of adhesives, resins, mortars etc. on the external surface, owing to the fact that the outside surface is too smooth or not adapted to the cited adhesives.

Another drawback of the solutions described above consists in the fact that the outside covering does not protect the fire-resistance properties of the panel, a problem which is aggravated by the fact that these insulating panels are often placed below membranes that require affixing with hot scarfing and therefore they are subjected to a thermal shock.

Another drawback consists in the fact that the coating of the aforementioned known panels does not guarantee resistance to water and thus it does not prevent the formation of algae or mould, thus exposing the panel to contamination.

Another drawback of the known art is the formation of bubbles in the panel owing to humidity which is present in the paper.

Another drawback which is found in the known art consists in that panels that can be positioned on a roof and are gas-tight cannot be hot scarfed, since they are made with surfaces like lacquered plain aluminium foil, aluminium foil bonded with plastic film, aluminium foil bonded with paper, or multilayer with aluminium film, which are all surfaces that cannot be hot scarfed, because they have a base that does not allow hot scarfing. The hot-scarfable surfaces which are currently used in making panels for roofs are bituminous "open face" surfaces which are adapted to receive hot scarfing, but do not have any gas-tightness characteristics.

In practice, when a hot-scarfable product is applied, and currently such a product is of the "open face" type, it is necessary to employ thicker panels in order to limit the diffusion of the gaseous phase towards the outside of the panel and ensure low values of 1 and therefore good thermal insulation.

The gas-tight products which are currently used cannot be hot scarfed.

US 5 220 760 A discloses an exterior structural foam sheathing panel comprising a central insulating core of closed-cell plastic foam, on each face of which there is adhered, by means of an adhesive, a vapor-impervious sheet of metallic foil, to each of which in turn there is laminated by means of an adhesive a fibrous cover sheet. To the exposed planar surface of one or both fibrous sheets there is applied a weather protection material such as polyethylene film, urethane resin, paint, water sealant coatings, or aluminum foil.

US 4 948 655 A discloses a composite panel comprising a heat-insultating material layer of foamed plastic to which there is secured a waterproof bitumen compound layer. The bitumen compound is coated to the heat-insultating layer in a liquid state at a temperature ranging from 150° C. to 190° C. A waterproofing membrane is provided, covering the bitumen compound, for providing a final mantel of layer of a roofing.

US 2009/280320 A1 discloses a built-up roofing surfacing sheet comprising, arranged one on top of the other, a bottom layer of sand, a fibreglass mat layer, an asphalt coating layer, a paper reinforcing layer, a smooth aluminum foil layer, and a white resin coating layer.

The aim of the present invention is to solve the above-mentioned technical problems, eliminating the drawbacks in the cited known art, by devising a panel structure that possesses good insulating properties and which maintains the properties of impermeability to the expanded gases over time and that can be hot-scarfed at the same time.

Within this aim, an object of the present invention is to devise a panel structure that has an optimum resistance to being walked on and to abrasion, in particular during laying and affixing operations.

Another object of the invention is to prevent the punching of micro-holes in the gas-impermeable aluminium film, if present, as a result of direct contact with the fibreglass.

A further object of the invention is to allow the application, on the surfaces of the panel, of adhesives, top coat plasters or mortars, for affixing the panel to other supports.

Another object of the invention is to protect and/or improve the fire-resistance properties of the panel.

Another object of the invention is to guarantee the resistance to water and to protect the panel from contamination from mould and/or bacteria.

In accordance with the invention, there is provided a panel structure as defined in the appended claims.

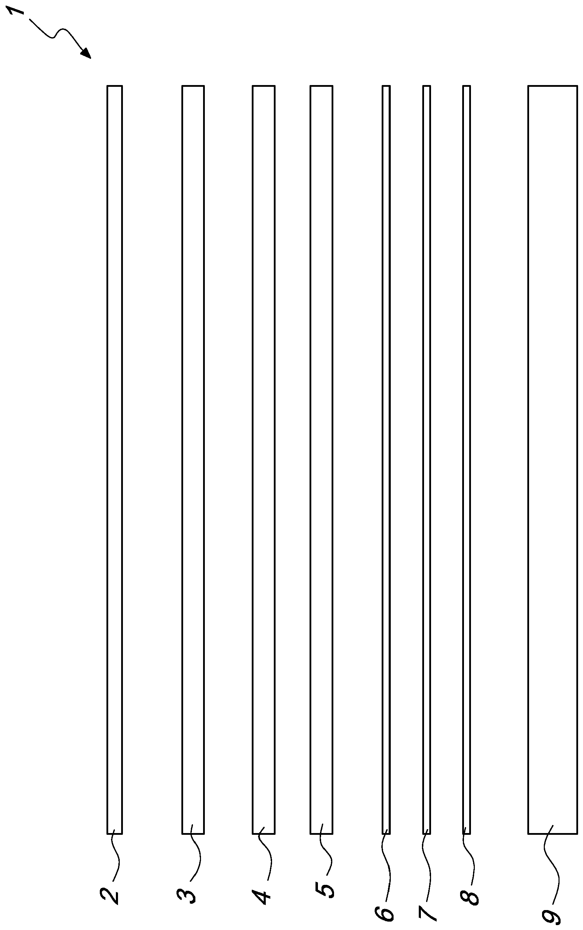

Further characteristics and advantages of the invention will become better apparent from the following detailed description of a particular embodiment, illustrated by way of non-limiting example in the accompanying drawings, wherein the sole Figure shows, in a schematic view, a panel structure according to the invention.

With reference to the figure, the reference numeral 1 indicates a panel structure that is impermeable to gases, particularly for the insulation of buildings, whose various components are shown separated from one another in the figure for a better graphical representation.

The panel structure 1 is composed of a hot-scarfable layer that is composed of a first layer 2 composed of polypropylene non-woven fabric or of polyethylene film or PP film (optionally treated with silicone) or of talc or of sand (on the hot-scarfable side).

Then there is a second layer 3 that is composed of a first elastoplastomeric bituminous mixture with properties that include adhesion.

The structure comprises a third layer 4 that is constituted by LDPE (low density polyethylene) or LLDPE (low low density polyethylene) or HDPE (high density polyethylene) or PP (polypropylene) or PA (polyamide) or EAA (ethylene acrylic acid) or EVA (ethyl vinyl acetate) or EVOH (ethylene vinyl alcohol) or PET (polyethylene terephthalate) which is made by means of extrusion, and then a fourth layer 5 that is constituted by paper with a grammage comprised between (40-100)g/m² with rough or crown effect.

The structure then comprises a fifth layer 6 that is constituted by PE or PP or PET (10-40) µm and is made by means of extrusion and functions as an adhesive layer and a sixth layer 7 that is constituted by aluminium (7-30) µm.

The structure then comprises a seventh layer 8 that is constituted by PE or PP or PET (10-40 µm) and is made by means of extrusion or which is constituted by lacquering (for example epoxy, acrylic or nitro).

The structure lastly comprises an eighth layer 9 that is constituted by a panel made of PIR/PUR.

The production process specifies that the third, fourth, fifth, sixth and seventh layers be mono-bituminized, i.e. bituminized on one side only by means of an elastoplastomeric mixture that is constituted by the second layer 3; this mixture is then coupled to the first layer 2.

In this way, with the coupling to a panel of PIR/PUR 9, a panel structure is obtained that is impermeable to gases and at the same time can be hot-scarfed.

It has been found that the invention fully achieves the specified aim and objects, a panel structure having been obtained that is impermeable to expanded gases over time and that can be hot-scarfed at the same time.

Moreover, bituminous mixture or PP or sand or talc on the hot-scarfable side protect the aluminium which could be damaged if walked upon.

The solution shown therefore makes it possible to apply a surface that can be hot scarfed and is gas-tight in the roof system, with the economic advantage that a panel can be used which is thinner and yet ensures good thermal insulation, with low values of λ.

Consequently there is lower consumption of PIR and PUR and fewer emissions of CO₂ into the atmosphere.

Obviously the materials used as well as the dimensions constituting the individual components of the invention can be more pertinent according to specific requirements. The various means for effecting certain different functions shall not in any way coexist only in the illustrated embodiment, but in and of themselves may be present in many embodiments, even if they are not illustrated.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A panel structure that is impermeable to gases, particularly for the insulation of buildings, the panel structure comprising:
a first layer composed of polypropylene non-woven fabric or polyethylene film or PP film (optionally treated with silicone) or talc or sand, the first layer being hot-scarfable,
and a second layer that is composed of a first elastoplastomeric bituminous mixture with adhesive properties,
and a third layer that is constituted by LDPE or LLDPE or HDPE or PP or PA or EAA or EVA or EVOH or PET (10-40) µm, which is made by means of extrusion,
and a fourth layer that is constituted by paper with a grammage that is comprised between (40-100)g/m² with rough or crown effect,
and a fifth layer that is constituted by PE or PP or PET (10-40) µm which is made by means of extrusion and which functions as an adhesive layer,
and a sixth layer that is constituted by aluminium (7-30) µm,
and by a seventh layer that is constituted by PE or PP or PET (10-40) µm and is made by means of extrusion or which is constituted by lacquering,
and an eighth layer that is constituted by a PIR/PUR panel.

2. The structure according to claim 1, **characterized in that** it has a total grammage that is (600-800) g/m².

3. The structure according to claim 1, **characterized in that** it has a total grammage that is (500-1,000) g/m².

## Patentansprüche

1. Eine für Gase undurchlässige Paneelstruktur, insbesondere zur Isolierung von Gebäuden, die Folgendes umfasst:
eine erste Schicht aus Polypropylen-Vliesstoff, Polyethylenfolie oder PP-Folie (wahlweise mit Silikon behandelt) oder Talk oder Sand, wobei die erste Schicht brenngeputzt werden kann,
eine zweite Schicht aus einer ersten elastoplastomeren bituminösen Mischung mit adhäsiven Eigenschaften,
eine dritte Schicht aus LDPE, LLDPE, HDPE, PP, PA, EAA, EVA, EVOH oder PET (10-40) µm, die durch Extrusion hergestellt wird,
eine vierte Schicht, die aus Papier mit einem Quadratmetergewicht zwischen (40-100) g/m² mit rauem oder Kroneneffekt besteht,
eine fünfte Schicht, die aus PE, PP oder PET (10-40) µm besteht, durch Extrusion hergestellt wird und als Haftschicht wirkt,
eine sechste Schicht, die aus Aluminium (7-30) µm besteht,
eine siebte Schicht, die aus PE, PP oder PET (10-40) µm besteht und durch Extrusion hergestellt wird oder die aus Lackierung besteht,
und eine achte Schicht, die aus einem PIR/PUR-Paneel besteht.

2. Die Struktur gemäß Anspruch 1, **dadurch gekennzeichnet, dass** sie ein Gesamt-Quadratmetergewicht von (600-800)g/m² hat.

3. Die Struktur gemäß Anspruch 1, **dadurch gekennzeichnet, dass** sie ein Gesamt-Quadratmetergewicht von (500-1.000)g/m² hat.

## Revendications

1. Structure de panneau qui est imperméable aux gaz, particulièrement pour l'isolation de bâtiments, la structure de panneau comprenant :
une première couche composée de tissu non tissé de polypropylène ou de film de polyéthylène ou de film de PP (en option traité avec du silicone) ou de talc ou de sable, la première couche pouvant être formée à chaud,
et une seconde couche qui est composée d'un premier mélange bitumineux élastoplastomérique avec des propriétés adhésives,
et une troisième couche qui est constituée par du PEBD ou du PEBDL ou du PEHD ou du PP ou du PA ou de l'EAA ou de l'EVOH ou du PET (10-40) µm, qui est réalisée par extrusion
et une quatrième couche qui est constituée par du papier avec un grammage qui est compris entre (40-100)g/m² avec un effet de rugosité ou de couronne,
et une cinquième couche qui est constituée par du PE ou du PP ou du PET (10-40) µm qui est réalisée par extrusion et qui fonctionne comme une couche adhésive,
et une sixième couche qui est constituée par de l'aluminium (7-30) µm,
et par une septième couche qui est constituée par du PE ou du PP ou du PET (10-40) µm et qui est réalisée par extrusion ou qui est constituée par laquage,
et une huitième couche qui constituée par un panneau de PIR/PUR.

2. Structure selon la revendication 1, **caractérisée en ce qu'**elle a un grammage total qui est de (600-800) g/m².

3. Structure selon la revendication 1, **caractérisée en ce qu'**elle a un grammage total qui est de (500-1.000) g/m².
